# EUROPÄISCHE PATENTANMELDUNG

(11) **EP 4 623 672 A1**
(43) Veröffentlichungstag der Anmeldung: **01.10.2025**
(21) Anmeldenummer: 25157944.7
(22) Anmeldetag: 14.02.2025
(51) Int. Cl.: A01G 9/04, A01G 31/02

(54) **HYDROPONIK-SYSTEM**

(30) Priorität: 26.03.2024 DE 202024101513 U
(71) Anmelder: Barnstorfer Kunststofftechnik GmbH & Co. KG, 49406 Barnstorf (DE)
(72) Erfinder: Borchers, Florian, 49424 Goldenstedt (DE)
(74) Vertreter: Hoener, Matthias

(57) **Zusammenfassung**

Die Erfindung betrifft ein Hydroponik-System mit Kanalelement (11) und Deckelelement (12) aus insbesondere extrudiertem Kunststoff, wobei das Deckelelement (12) entlang einer Längsseite durch ein Verbindungsmittel (13) mit dem Kanalelement (11) beweglich verbunden ist und sich das Verbindungsmittel (13) vorzugsweise über die volle Länge des Kanalelements (11) und/oder des Deckelelements (12) erstreckt, insbesondere vollflächig.

## Beschreibung

Die Erfindung betrifft ein Hydroponik-System nach dem Oberbegriff des Anspruchs 1. Vorgesehen sind ein Kanalelement und ein Deckelelement aus insbesondere extrudiertem Kunststoff.

Hydroponik-Systeme dienen der Versorgung von Pflanzenzöglingen mit Wasser, Nährstoffen und Sauerstoff. In oder über einem Kanal werden die Pflanzenzöglinge frei von Erde - mit oder ohne Substrat - gehalten und mit Wasser und Nährstoffen versorgt. Überschüssige Flüssigkeit wird im Kanal aufgefangen und abgeleitet oder im Kreislauf geführt. Dabei kann auch über den Kanal selbst Flüssigkeit zugeführt werden, je nach Art des Hydroponik-Systems.

Der Kanal ist mit einem Deckel versehen, welcher Öffnungen für die Pflanzenzöglinge aufweist. Der Deckel verringert oder verhindert einen Verlust an Flüssigkeit durch Verdunstung. Auch schützt der Deckel die Wurzeln der Pflanzenzöglinge vor äußeren Einflüssen. Der Kanal kann relativ lang ausgebildet sein. Das Aufsetzen des Deckels und Schließen desselben erfordert Zeit und Geschick.

Aufgabe der vorliegenden Erfindung ist die Schaffung eines Hydroponik-Systems mit einem einfach zu handhabenden Deckel.

Zur Lösung der Aufgabe weist das erfindungsgemäße Hydroponik-System die Merkmale des Anspruchs 1 auf. Insbesondere ist vorgesehen, dass das Deckelelement entlang einer Längsseite durch ein Verbindungsmittel mit dem Kanalelement beweglich verbunden ist. Durch die Verbindung des Deckelelements mit dem Kanalelement ist ein passgenaues Aufsetzen und Schließen des Deckelelements leicht möglich und schnell ausführbar.

Nach einem weiteren Gedanken der Erfindung kann vorgesehen sein, dass sich das Verbindungsmittel über die volle Länge des Kanalelements und/oder des Deckelelements erstreckt, insbesondere vollflächig. Das Verbindungsmittel ist dadurch ein Streifen parallel zu Kanalelement und Deckelelement, als solcher relativ stabil und ergänzt die Wirkung des Deckelelements.

Nach einem weiteren Gedanken der Erfindung kann vorgesehen sein, dass das Verbindungsmittel aus einem Werkstoff besteht, der weicher ist als das Kanalelement und/oder das Deckelelement. Kanalelement und/oder Deckelelements sollen möglichst stabil sein. Das Verbindungsmittel kann aufgrund seiner Werkstoffeigenschaften eine Bewegung des Deckelelements relativ zum Kanalelement ermöglichen. Dabei ist das Verbindungsmittel in sich vorzugsweise elastisch, so dass eine mehrfache Bewegung möglich ist.

Nach einem weiteren Gedanken der Erfindung kann vorgesehen sein, dass das Verbindungsmittel eine geringere Wandstärke aufweist als das Kanalelement und/oder das Deckelelement. Das Verbindungsmittel soll möglichst eine geringere Formstabilität aufweisen als das Kanalelement und das Deckelelement. Dies kann durch die geringere Wandstärke ermöglicht werden.

Nach einem weiteren Gedanken der Erfindung kann vorgesehen sein, dass Kanalelement und Deckelelement mit dem Verbindungsmittel durch Koextrusion hergestellt sind, und dass das Verbindungsmittel insbesondere mit dem Kanalelement und/oder mit dem Deckelelement fest verbunden ist. Die Fertigung mittels Koextrusion ermöglicht eine kostengünstige Massenproduktion.

Nach einem weiteren Gedanken der Erfindung kann vorgesehen sein, dass Kanalelement und/oder Deckelelement aus Hart-PVC, PP, PE oder ABS besteht. Diese Werkstoffe gewährleisten eine hohe Formstabilität von Kanalelement und Deckelelement.

Nach einem weiteren Gedanken der Erfindung kann vorgesehen sein, dass das Verbindungsmittel aus Weich-PVC, TPU (thermoplastische Elastomere auf Urethanbasis), TPO (thermoplastische Elastomere auf Olefinbasis), TPE (thermoplastische Elastomere) oder PE (Polyethylen) besteht. Diese Werkstoffe ermöglichen eine geringere Formstabilität des Verbindungsmittels.

Nach einem weiteren Gedanken der Erfindung kann vorgesehen sein, dass das Kanalelement an einem dem Verbindungsmittel zugewandten, längsseitigen Kanal-Rand eine kanalseitige Nut zur Aufnahme eines hierzu korrespondierenden kanalseitigen Verbindungsmittel-Randes aufweist. Dies ermöglicht eine gute dauerhafte Verbindung zwischen Verbindungsmittel und Kanalelement an dieser Stelle.

Nach einem weiteren Gedanken der Erfindung kann vorgesehen sein, dass der kanalseitige Verbindungsmittel-Rand einen Profilwulst aufweist, und dass die kanalseitige Nut am Kanal-Rand innenseitig zur Aufnahme des Profilwulstes vorzugsweise eine Querschnittsverbreiterung aufweist. Dadurch kann der Verbindungsmittel-Rand formschlüssig in der kanalseitigen Nut gehalten werden.

Nach einem weiteren Gedanken der Erfindung kann vorgesehen sein, dass das Deckelelement an einem dem Verbindungsmittel zugewandten Deckel-Rand eine deckelseitige Nut zur Aufnahme eines hierzu korrespondierenden deckelseitigen Verbindungsmittel-Randes aufweist. Dies ermöglicht eine gute dauerhafte Verbindung zwischen Verbindungsmittel und Deckelelement.

Nach einem weiteren Gedanken der Erfindung kann vorgesehen sein, dass der deckelseitige Verbindungsmittel-Rand einen Profilwulst aufweist, und dass die deckelseitige Nut innenseitig zur Aufnahme des Profilwulstes vorzugsweise eine Querschnittsverbreiterung aufweist. Dadurch kann der Verbindungsmittel-Rand formschlüssig in der deckelseitigen Nut gehalten werden.

Nach einem weiteren Gedanken der Erfindung kann vorgesehen sein, dass der dem Verbindungsmittel zugewandte Kanal-Rand im Bereich der kanalseitigen Nut mit einer Verdickung ausgebildet ist. Dies ermöglicht die Ausbildung einer ausreichend großen Nut im Kanal-Rand.

Nach einem weiteren Gedanken der Erfindung kann vorgesehen sein, dass die Verdickung des Kanal-Randes unterhalb der kanalseitigen Nut einen Fortsatz aufweist, welcher sich unterhalb des Verbindungsmittels erstreckt. Der Fortsatz kann eine Auflage für den Deckel-Rand bilden. Entsprechend erstreckt sich der Fortsatz vorzugsweise mindestens über die Breite des Verbindungsmittels.

Nach einem weiteren Gedanken der Erfindung kann vorgesehen sein, dass der dem Verbindungsmittel zugewandte Deckel-Rand im Bereich der deckelseitigen Nut eine Verdickung aufweist. Mit der Verdickung kann der Deckel-Rand eine ausreichend große Nut aufnehmen.

Nach einem weiteren Gedanken der Erfindung kann vorgesehen sein, dass die Verdickung des Deckel-Randes auf einem Fortsatz der Verdickung des Kanal-Randes aufliegt oder vorzugsweise zumindest über dem Fortsatz liegt. Das Verbindungsmittel erstreckt sich oberhalb des Fortsatzes und wird von demselben nach unten abgedeckt.

Nach einem weiteren Gedanken der Erfindung kann vorgesehen sein, dass das Deckelelement an einem dem Verbindungsmittel gegenüberliegenden Deckel-Rand ein U-Profil aufweist, welches einen hierzu benachbarten Kanal-Rand umfassen kann. Mit dem U-Profil ist eine sichere Positionierung des Deckel-Randes am Kanal-Rand möglich.

Nach einem weiteren Gedanken der Erfindung kann vorgesehen sein, dass das U-Profil einen unteren Steg und einen oberen Steg aufweist, wobei der untere Steg aus dem oberen Steg senkrecht nach unten herausgeführt ist und anschließend parallel zum oberen Steg verläuft. Dadurch kann das Deckelelement an seiner Oberseite glatt ausgebildet sein, ohne Erhebungen oder dergleichen.

Nach einem weiteren Gedanken der Erfindung kann vorgesehen sein, dass das U-Profil einen unteren Steg und einen oberen Steg aufweist, wobei der untere Steg parallel zum oberen Steg in Richtung zum benachbarten Kanal-Rand kürzer ist als der obere Steg. Dadurch kann ein Einsinken des Deckelelements an dieser Stelle unter den benachbarten Kanal-Rand auf einfache Weise verhindert werden.

Nach einem weiteren Gedanken der Erfindung kann vorgesehen sein, dass das Kanalelement innenseitig, auf einem Boden, mehrere Längsstege aufweist, insbesondere mit gleichen Abständen zueinander und/oder mit einer Höhe von nicht mehr als 10 % der Gesamthöhe des Kanalelements. Die Längsstege erhöhen die Formstabilität gegen Biegung, ohne das für die Pflanzen zur Verfügung stehende Volumen im Kanalelement wesentlich einzuschränken.

Nach einem weiteren Gedanken der Erfindung kann vorgesehen sein, dass das Kanalelement außenseitig, unter einem Boden mehrere Längsstege aufweist, zumindest je einen Längssteg benachbart zu einer Seitenwand und/oder mit einem Abstand zur benachbarten Seitenwand von nicht mehr als 5 % der Gesamtbreite des Kanalelements. Die Längsstege unter dem Boden wirken als Standfüße und erhöhen zugleich die Formstabilität gegen Biegung.

Nach einem weiteren Gedanken der Erfindung kann vorgesehen sein, dass das Kanalelement Boden, Seitenwände und hierzu schräg abgewinkelte Dachwände aufweist. Durch die schrägen Dachwände erhält der Kunststoffkanals 10 insgesamt ein sechseckiges Profil, ausgehend von einem Rechteckprofil, wobei obere Kanten des Rechteckprofils abgeschrägt sind.

Nach einem weiteren Gedanken der Erfindung kann vorgesehen sein, dass das Deckelelement Öffnungen zum Durchtritt von Pflanzen aufweist. Durch die Anordnung der Öffnungen im Deckelelement bleibt das Kanalelement ohne zusätzliche Bearbeitung.

Nach einem weiteren Gedanken der Erfindung kann vorgesehen sein, dass die Öffnungen ausgestanzt sind. Das Ausstanzen der Öffnungen ermöglicht eine rationale Fertigung in hohen Stückzahlen und ist auch in Verbindung mit der oben erwähnten Koextrusion möglich.

Kanalelement, Deckelelement und Verbindungsmittel sind vorzugsweise Profile. Dadurch ergeben sich offene Enden, die insbesondere durch zusätzliche Endkappen abgeschlossen sind. Die Endkappen umfassen vorteilhafterweise die offenen Enden vollständig, zumindest von einem Boden des Kanalelements bis zu einem Teil der Höhe desselben, vorzugsweise bis über das Deckelelement und das Verbindungsmittel.

Weitere Merkmale der Erfindung ergeben sich aus den Schutzansprüchen und aus der weiteren Beschreibung. Vorteilhafte Ausführungsbeispiele der Erfindung werden nachfolgend anhand von Zeichnungen näher erläutert. Es zeigen:

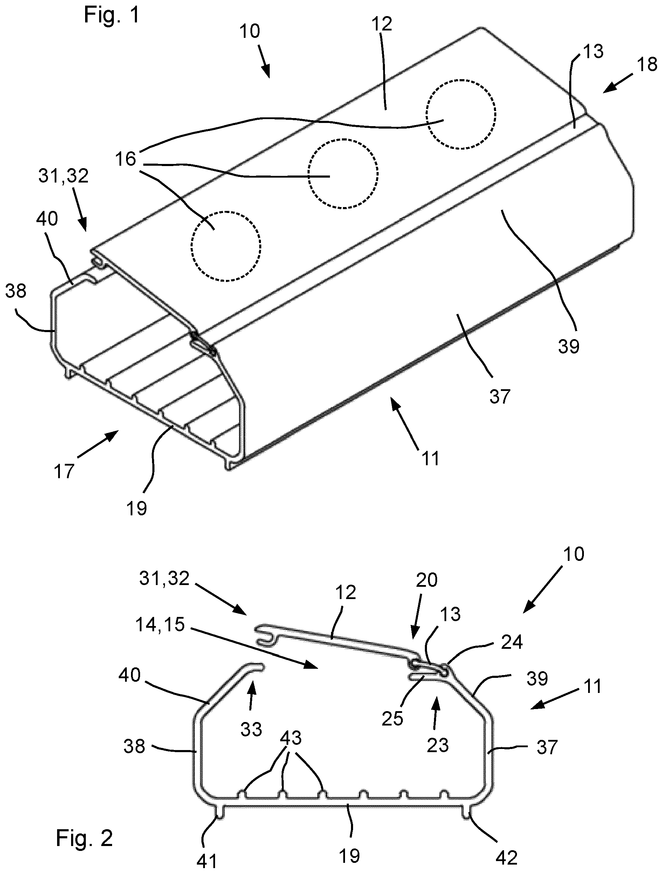

Figur 1 einen Kunststoffkanal eines Hydroponik-Systems in perspektivischer Darstellung,
Figur 2 den Kunststoffkanal gemäß Figur 1 in Stirnansicht,

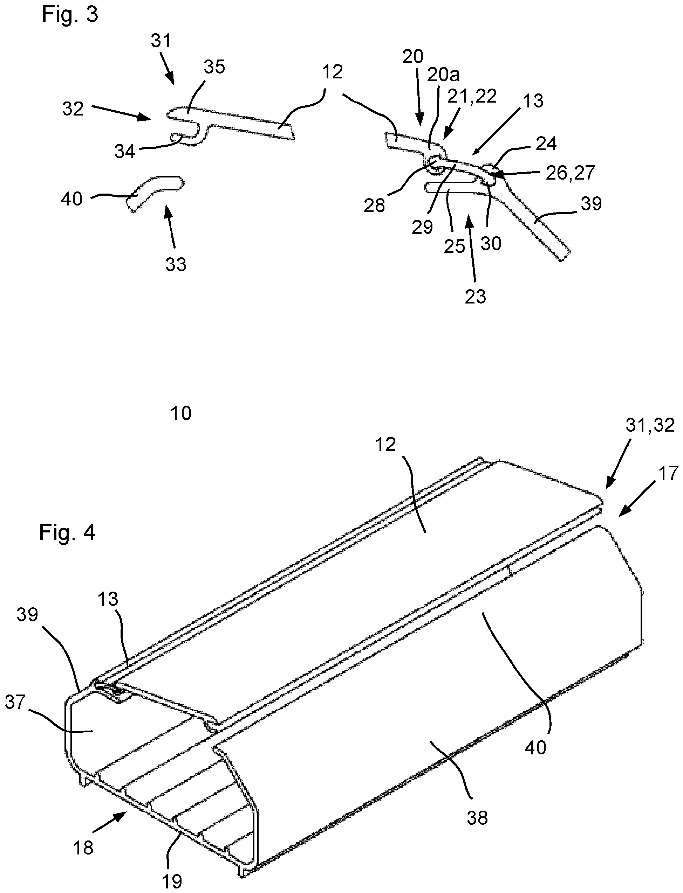

Figur 3 ein vergrößertes Detail aus Figur 2,
Figur 4 den Kunststoffkanal gemäß Figur 1 in einer um 180° gedrehten perspektivischen Darstellung.

Ein Hydroponik-System zur Versorgung von Pflanzenzöglingen weist je nach Systemtyp unterschiedliche Komponenten auf. Stets vorgesehen sind eine Wanne oder ein Topf, in denen Wasser oder eine Nährflüssigkeit vorhanden sind oder aufgefangen werden. In modernen Systemen werden industriell und in großen Stückzahlen herstellbare Kunststoffkanäle 10 als Wannen verwendet.

Der Kunststoffkanal 10 besteht hier aus einem unteren Kanalelement 11, einem oberen Deckelelement 12 und einem Verbindungsmittel 13 zur Verbindung des Deckelelements 12 mit dem Kanalelement 11. Das Deckelelement 12 kann einen längsgerichteten Öffnungsspalt 14 an einer Oberseite 15 des Kanalelements 11 vollständig abdecken. Kanalelement 11 und Verbindungsmittel 13 sind jeweils vollflächig ausgebildet. Das Deckelelement 12 weist mehrere in Längsrichtung des Kunststoffkanal 10 aufeinanderfolgende Öffnungen 16 zur Aufnahme der Pflanzenzöglinge auf. Die Öffnungen 16 sind hier nur gestrichelt angedeutet.

Um ein weitgehend geschlossenes System zu bilden, weist der Kunststoffkanal 10 an beiden Enden 17, 18 nicht gezeigte Endkappen auf. Diese umfassen die Enden 17, 18 und erstrecken sich bei auf dem Kanalelement 11 aufliegendem Deckelelement 12 bis über dessen Höhe, zumindest über einen Teil der Höhe des Kanalelements 11, ausgehend von einem Boden 19 des Kanalelements 11.

Kanalelement 11, Deckelelement 12 und Verbindungsmittel 13 sind hier durch Extrusion gebildete Profile. Dabei ist das Verbindungsmittel 13 formschlüssig einerseits mit dem Kanalelement 11 und andererseits mit dem Deckelelement 12 verbunden. Durch Koextrusion ist der Kunststoffkanal 10 mit allen Elementen 11, 12, 13 in einem kontinuierlichen Verfahren herstellbar. Da das Deckelelement 12 nur an einem längsseitigen Deckel-Rand 20 mit dem Verbindungsmittel 13 verbunden ist, ist das Deckelelement 12 während der Koextrusion oder unmittelbar im Anschluss an die Koextrusion relativ zum Kanalelement 11 aufklappbar. In dieser Position kann das Deckelelement 12 auf einfache Weise mit den erwähnten Öffnungen 16 versehen werden, beispielsweise durch Stanzen bei auf einer Stanzunterlage aufliegendem Deckelelement 12.

Das Deckelelement 12 weist am Deckel-Rand 20 zum Verbindungsmittel 13 hin eine Nut 21 auf, zur Aufnahme eines hierzu korrespondierenden Verbindungsmittel-Randes 22. Der Deckel-Rand 20 liegt auf einem Kanal-Rand 23 auf. Der Kanal-Rand 23 weist in diesem Bereich eine Verdickung 24 mit anschließendem Fortsatz 25 auf. In der Verdickung 24 ist eine Nut 26 gebildet, in der ein kanalseitiger Verbindungsmittel-Rand 27 gehalten ist.

Das Verbindungsmittel 13 weist hier ein Profil mit einem deckelseitigen Profilwulst 28, einem Mittelsteg 29 und einem kanalseitigen Profilwulst 30 auf. Die Profilwülste 28, 30 bilden zugleich die Verbindungsmittel-Ränder 22, 27 und sind formschlüssig in den Nuten 21, 26 gehalten. Nutöffnungen weisen einen geringeren Querschnitt auf als die Profilwülste 28, 30. Mit der derart gebildeten Profilgeometrie erstreckt sich das Verbindungsmittel 13 oberhalb des Fortsatzes 25.

Das Deckelelement 12 weist an einem dem Verbindungsmittel 13 gegenüberliegenden Deckel-Rand 31 ein U-Profil 32 auf, welches einen hierzu benachbarten Kanal-Rand 33 umfassen kann. Das U-Profil 32 weist einen unteren Steg 34 und einen oberen Steg 35 auf. Der obere Steg 35 liegt auf dem Kanal-Rand 33 auf, wenn das Deckelelement 12 geschlossen ist. Der untere Steg 34 ist etwas kürzer ausgebildet als der obere Steg 35. Der obere Steg 35 erstreckt sich in Fortsetzung einer Deckelwand 36. Der untere Steg 34 ist aus dem oberen Steg 35 senkrecht zu diesem herausgeführt und verläuft anschließend parallel zum oberen Steg 35.

Kanalelement 11 und/oder Deckelelement 12 sind härter und/oder weniger elastisch als das Verbindungsmittel 13. Vorzugsweise besteht das Verbindungsmittel aus Weich-PVC, TPU (thermoplastische Elastomere auf Urethanbasis), TPO (thermoplastische Elastomere auf Olefinbasis), TPE (thermoplastische Elastomere) oder PE (Polyethylen). Kanalelement 11 und/oder Deckelelement 12 bestehen insbesondere aus Hart-PVC, Polypropylen (PP), Polyethylen (PE) oder Acrylnitril-Butadien-Styrol-Copolymer (ABS).

Bedingt durch die verwendeten Werkstoffe und/oder die beschriebene Geometrie von Deckelelement 12, Öffnungsspalt 14 und Verbindungsmittel 13 kann das Deckelelement 12 den Öffnungsspalt 14 verschließen und ist nach dem Schließen gegen Öffnungsbewegung formschlüssig gesichert. Das U-Profil 32 umfasst den Kanal-Rand 33. Zum Öffnen muss das Deckelelement 12 gegen den gegenüberliegenden Kanal-Rand 23 gedrückt werden, was durch den Werkstoff und die Geometrie des Verbindungsmittels 13 ermöglicht wird.

Das Kanalelement 11 weist ein spezielles Profil auf, mit dem Boden 19, Seitenwänden 37, 38, hierzu schräg abgewinkelten Dachwänden 39, 40 und den Kanal-Rändern 23, 33. Der Boden 19 weist unterseitig nahe den Seitenwänden 37, 38 je einen abwärts gerichteten Steg 41, 42 auf. Oberseitig weist der Boden 19 mehrere aufwärtsgerichtete Stege 43 auf, welche gleiche Abstände zueinander aufweisen und ebenso wie die Stege 41, 42 in Längsrichtung des Kanalelements 11 verlaufen und dessen Stabilität erhöhen. Die Stege 41 bis 43 weisen eine Höhe von vorzugsweise nicht mehr als 10 % der Gesamthöhe des Kanalelements 11 auf. Die unteren Stege 41, 42 weisen jeweils einen Abstand zur Seitenwand von vorzugsweise nicht mehr als 5 % der Gesamtbreite des Kanalelements 11 auf.

Der Kunststoffkanal 10 wird mit Kanalelement 11, Deckelelement 12 und Verbindungsmittel 13 in einem Koextrusions-Verfahren hergestellt. Derartige Verfahren sind grundsätzlich bekannt und erprobt, auch in Verbindung mit der Verwendung verschiedener Werkstoffe. Vorliegend können im Anschluss an die Koextrusion die Öffnungen 16 in das Deckelelement 12 eingebracht werden. Letzteres kann zu diesem Zweck um einen definierten Winkel relativ zum Öffnungsspalt 14 aufgestellt und durch eine stabile Unterlage abgestützt sein, während die Öffnungen 16 ausgestanzt werden.

Die Abmessungen des Kunststoffkanals 10 sind an die Verwendung als Bestandteil eines Hydroponik-System angepasst. Bevorzugt ist eine Länge von 3 bis 6 m, eine Breite von 10 cm und eine Höhe von 5 cm. Die Abmessungen sind lediglich Beispiele und können je nach Art des Hydroponik-Systems und der aufzuziehenden Pflanzen angepasst werden.

### Bezugszeichenliste:

| | | | |
|---|---|---|---|
| 10 | Kunststoffkanal | 34 | unterer Steg |
| 11 | Kanalelement | 35 | oberer Steg |
| 12 | Deckelelement | 36 | Deckelwand |
| 13 | Verbindungsmittel | 37 | Seitenwand |
| 14 | Öffnungsspalt | 38 | Seitenwand |
| 15 | Oberseite (Kanalelement) | 39 | Dachwand |
| 16 | Öffnungen (im Deckelelement) | 40 | Dachwand |
| 17 | Ende (Kunststoffkanal) | 41 | Steg (abwärts) |
| 18 | Ende (Kunststoffkanal) | 42 | Steg (abwärts) |
| 19 | Boden (Kanalelement) | 43 | Stege (aufwärts) |
| 20 | Deckel-Rand | | |
| 20a | Verdickung (Deckel-Rand) | | |
| 21 | Nut (Deckelelement) | | |
| 22 | Verbindungsmittel-Rand (deckelseitig) | | |
| 23 | Kanal-Rand | | |
| 24 | Verdickung (Kanal-Rand) | | |
| 25 | Fortsatz (Kanal-Rand) | | |
| 26 | Nut (Kanal-Rand) | | |
| 27 | Verbindungsmittel-Rand (kanalseitig) | | |
| 28 | Profilwulst (deckelseitig) | | |
| 29 | Mittelsteg | | |
| 30 | Profilwulst (kanalseitig) | | |
| 31 | Deckel-Rand | | |
| 32 | U-Profil | | |
| 33 | Kanal-Rand | | |

## Patentansprüche

1. Hydroponik-System mit Kanalelement (11) und Deckelelement (12) aus insbesondere extrudiertem Kunststoff, **dadurch gekennzeichnet, dass** das Deckelelement (12) entlang einer Längsseite durch ein Verbindungsmittel (13) mit dem Kanalelement (11) beweglich verbunden ist, wobei sich das Verbindungsmittel (13) vorzugsweise über die volle Länge des Kanalelements (11) und/oder des Deckelelements (12) erstreckt, insbesondere vollflächig.

2. Hydroponik-System nach Anspruch 1, **dadurch gekennzeichnet, dass** das Verbindungsmittel (13) aus einem Werkstoff besteht, der weicher ist als das Kanalelement (11) und/oder das Deckelelement (12).

3. Hydroponik-System nach einem der Ansprüche 1 bis 2, **dadurch gekennzeichnet, dass** das Verbindungsmittel (13) eine geringere Wandstärke aufweist als das Kanalelement (11) und/oder das Deckelelement (12).

4. Hydroponik-System nach einem der Ansprüche 1 bis 3, **dadurch gekennzeichnet, dass** Kanalelement (11) und Deckelelement (12) mit dem Verbindungsmittel (13) durch Koextrusion hergestellt sind, und dass das Verbindungsmittel (13) insbesondere mit dem Kanalelement (11) und/oder mit dem Deckelelement (12) fest verbunden ist.

5. Hydroponik-System nach einem der Ansprüche 1 bis 4, **dadurch gekennzeichnet, dass** Kanalelement (11) und/oder Deckelelement (12) aus Hart-PVC, PP, PE oder ABS besteht und/oder dass das Verbindungsmittel (13) aus Weich-PVC, TPU, TPO, TPE oder PE besteht.

6. Hydroponik-System nach einem der Ansprüche 1 bis 5, **dadurch gekennzeichnet, dass** das Kanalelement (11) an einem dem Verbindungsmittel (13) zugewandten, längsseitigen Kanal-Rand (23) eine kanalseitige Nut (26) zur Aufnahme eines hierzu korrespondierenden kanalseitigen Verbindungsmittel-Randes (27) aufweist, wobei der kanalseitige Verbindungsmittel-Rand (27) vorzugsweise einen Profilwulst (30) aufweist und die kanalseitige Nut (26) am Kanal-Rand (23) innenseitig zur Aufnahme des Profilwulstes (30) vorzugsweise eine Querschnittsverbreiterung aufweist.

7. Hydroponik-System nach einem der Ansprüche 1 bis 6, **dadurch gekennzeichnet, dass** das Deckelelement (12) an einem dem Verbindungsmittel (13) zugewandten Deckel-Rand (20) eine deckelseitige Nut (21) zur Aufnahme eines hierzu korrespondierenden deckelseitigen Verbindungsmittel-Randes (22) aufweist, wobei der deckelseitige Verbindungsmittel-Rand (22) vorzugsweise einen Profilwulst (28) aufweist und die deckelseitige Nut (21) innenseitig zur Aufnahme des Profilwulstes (28) vorzugsweise eine Querschnittsverbreiterung aufweist.

8. Hydroponik-System nach Anspruch 6, **dadurch gekennzeichnet, dass** der dem Verbindungsmittel (13) zugewandte Kanal-Rand (23) im Bereich der kanalseitigen Nut (26) mit einer Verdickung (24) ausgebildet ist, wobei die Verdickung (24) des Kanal-Randes (23) unterhalb der kanalseitigen Nut (26) vorzugsweise einen Fortsatz (25) aufweist, welcher sich unterhalb des Verbindungsmittels (13) erstreckt.

9. Hydroponik-System nach Anspruch 7, **dadurch gekennzeichnet, dass** der dem Verbindungsmittel (13) zugewandte Deckel-Rand (20) im Bereich der deckelseitigen Nut (21) eine Verdickung (20a) aufweist, wobei die Verdickung (20a) des Deckel-Randes (20) insbesondere auf einem Fortsatz (25) der Verdickung (24) des Kanal-Randes (23) aufliegt oder vorzugsweise zumindest über dem Fortsatz (25) liegt.

10. Hydroponik-System nach einem der Ansprüche 1 bis 9, **dadurch gekennzeichnet, dass** das Deckelelement (12) an einem dem Verbindungsmittel (13) gegenüberliegenden Deckel-Rand (31) ein U-Profil (32) aufweist, welches einen hierzu benachbarten Kanal-Rand (33) umfassen kann.

11. Hydroponik-System nach Anspruch 10, **dadurch gekennzeichnet, dass** das U-Profil (32) einen unteren Steg (34) und einen oberen Steg (35) aufweist, wobei der untere Steg (34) aus dem oberen Steg (35) senkrecht nach unten herausgeführt ist und anschließend parallel zum oberen Steg (35) verläuft und/oder dass das U-Profil (32) einen unteren Steg (34) und einen oberen Steg (35) aufweist, wobei der untere Steg (34) parallel zum oberen Steg (35) in Richtung zum Kanal-Rand (33) kürzer ist als der obere Steg (35).

12. Hydroponik-System nach einem der Ansprüche 1 bis 11, **dadurch gekennzeichnet, dass** das Kanalelement (11) innenseitig, auf einem Boden (19), mehrere Längsstege (43) aufweist, insbesondere mit gleichen Abständen zueinander und/oder mit einer Höhe von nicht mehr als 10 % der Gesamthöhe des Kanalelements (11).

13. Hydroponik-System nach einem der Ansprüche 1 bis 12, **dadurch gekennzeichnet, dass** das Kanalelement (11) außenseitig, unter einem Boden (19) mehrere Längsstege (41, 42) aufweist, zumindest je einen Längssteg (41, 42) benachbart zu einer Seitenwand (37, 38) und/oder mit einem Abstand zur benachbarten Seitenwand (37, 38) von nicht mehr als 5 % der Gesamtbreite des Kanalelements (11).

14. Hydroponik-System nach einem der Ansprüche 1 bis 13, **dadurch gekennzeichnet, dass** das Kanalelement (11) Boden (19), Seitenwände (37, 38) und hierzu schräg abgewinkelte Dachwände (39, 40) aufweist.

15. Hydroponik-System nach einem der Ansprüche 1 bis 14, **dadurch gekennzeichnet, dass** das Deckelelement (12) Öffnungen (16) zum Durchtritt von Pflanzen aufweist, wobei die Öffnungen (16) vorzugsweise ausgestanzt sind.
